# EUROPEAN PATENT SPECIFICATION

(11) **EP 3 799 272 B1**
(45) Date of publication and mention of the grant of the patent: **12.01.2022**
(21) Application number: 20196991.2
(22) Date of filing: 18.09.2020
(51) Int. Cl.: H02K 7/116, H02K 7/14, H02K 21/22, B60K 7/00

(54) **GEARED IN-WHEEL MOTOR**
RADNABENMOTOR MIT GETRIEBE
MOTEUR-ROUE À ENGRENAGES

(30) Priority: 27.09.2019 KR 20190119799
(43) Date of publication of application: 31.03.2021
(73) Proprietor: LG Electronics Inc., 07336 SEOUL (KR)
(72) Inventor: KIM, Jaeyeon, 06772 Seoul (KR); KIM, Yeongjae, 06772 Seoul (KR); OH, Seung-Suk, 06772 Seoul (KR)
(74) Representative: Vossius & Partner Patentanwälte Rechtsanwälte mbB

(56) References cited:
- EP-A1- 3 131 185
- WO-A1-2006/137188
- WO-A2-2008/027159
- CN-B- 104 859 425
- CN-U- 201 563 027
- CN-U- 204 774 606
- CN-Y- 2 845 291
- US-A1- 2017 050 700

## Description

### BACKGROUND

### 1. Field

The present disclosure relates to a geared in-wheel motor.

### 2. Background

In-wheel motors are used for transportation means powered by electricity.

For the in-wheel motors, power is output from a motor assembly disposed in a rim.

The motor assembly includes a stator and a rotor. Power generated by the motor assembly is delivered directly to a wheel of the in-wheel motor without an additional power delivery device.

The wheel wound around the rim of the in-wheel motor uses electricity as a power source to rotate.

The in-wheel motor, as described above, has a structure simpler than that of an in-wheel motor of the related art of an ordinary transporting means, as the in-wheel motor requires no driving device and power delivery device having complex structure.

Thus, thanks to a simple structure of the in-wheel motor, transporting means may become lightweight, and loss of energy, which is caused when power is delivered, may be reduced.

The in-wheel motor includes a tire, a rim, a motor assembly, and a shaft.

In a brief look at the in-wheel motor, the tire wraps the rim and is coupled to the rim. The motor assembly includes a stator and rotor, and is provided in the rim. The shaft passes through a center of the stator and connects to the stator.

The stator of the in-wheel motor receives power through a leader lie for power supply connected to the outside. When power is supplied to the stator, the rotor rotates around the stator.

The rotor connects with the rim. Accordingly, as the rotor rotates, the rim rotates, and the tire coupled to an outer wheel of the rim rotates, too.

As described above, in the in-wheel motor, the shaft and the stator are fixed, and the rotor, the rim and the tire rotate.

A geared in-wheel motor is a motor into which a reduction gear and a clutch are built.

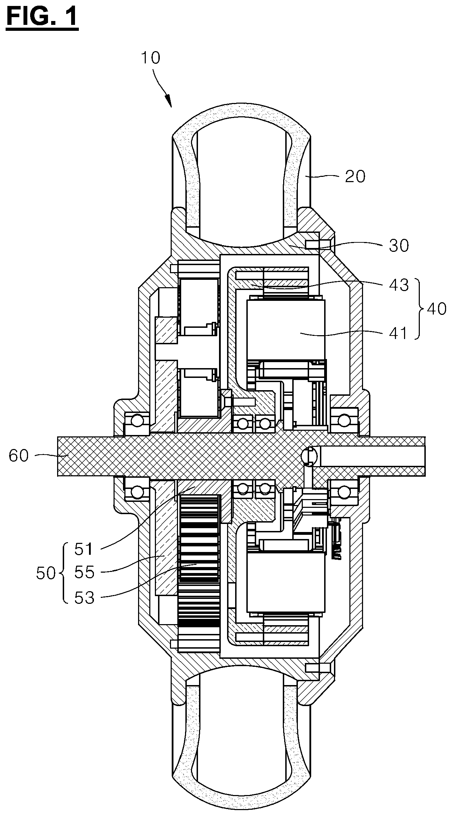

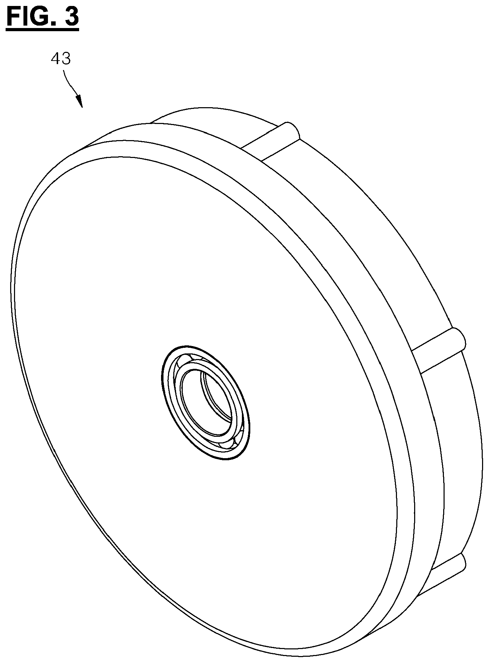

FIGS. 1 to 3 are views schematically illustrating an ordinary geared in-wheel motor, gear assembly structure, and rotor structure.

The ordinary geared in-wheel motor 10, as illustrated, includes a tire 20, a rim 30, a motor assembly 40 including a stator 41 and a rotor 43, a gear assembly 50 and a shaft 60.

The gear assembly 50 of the related art includes a sun gear 51 attached to the rotor 43, and a planetary gear 53 attached to a carrier 55, which is an additional component, and connected with the sun gear 51.

In the gear assembly 50 of the related art, as described above, the carrier 55 to which the planetary gear 53 is attached and the rotor 43 to which the sun gear 51 is attached are independently designed.

Accordingly, an inner space in which the carrier 55 is installed is required, and due to weigh of the carrier 55, weight of the in-wheel motor increases.

Against this backdrop, there is a growing need for technologies for implementing an in-wheel motor that is more compact and lightweight than an in-wheel motor of the related art.

As a related art, an in-wheel driving device is disclosed in Korean Patent Publication No. 10-2014-0006377 (referred to as "prior art document 1").

The in-wheel driving device in prior art document 1 includes a motor, a first speed reducer engaged with a driving shaft of the motor and configured to reduce a speed of rotation, wherein the first speed reducer includes a first sun gear, and a first planetary gear configured to rotate along a circumference of the first sun gear.

The first planetary gear is installed at an additional first carrier and is configured to rotate. Due to the first carrier, a small and lightweight in-wheel driving device cannot be implemented.

As another relater art, a motor structure for an electric bicycle is disclosed in Korean Patent Publication No. 10-2014-0038055 (referred to as prior art document 2).

The motor structure in prior art document 2 includes a first speed reduction unit connected with a rotational shaft configured to rotate along with a rotor, wherein the first speed reduction unit includes a first sun gear and a first planetary gear.

The first planetary gear in prior art document 2 also has a structure where the first planetary gear is installed using a first carrier that is an additional component instead of being directly installed at the rotor.

Accordingly, the first carrier for the first planetary gear is necessarily built into the motor structure, and due to weight of the first carrier, weight of the motor structure increases.

### [Prior Art Document]

### [Patent Document]

Korean Patent Publication No. 10-2014-0006377
Korean Patent Publication No. 10-2014-0038055

CN 204 774 606 U relates to a tunnel is in -wheel motor for the tractor, characterized by: including shell, stator mount, rotor, stator, first sun gear, first planet wheel, second sun gear, second planet wheel, planet wheel back shaft, main shaft, first planet wheel, second planet wheel constitute integratively through planet wheel connection spline housing key joint, and first planet wheel meshes with first sun gear external tooth, and the second sun gear passes through second sun gear support bearing to be supported on the main shaft, and the power take off connection pad is connected with release mechanism.

WO 2008/027159 A2 relates to a pair of compact electric wheel motor assemblies that can selectively drive a pair of wheels that are not otherwise driven by an engine.

### SUMMARY

The invention is defined by independent claim 1. Further embodiments of the invention are defined by the dependent claims. The present disclosure is directed to a geared in-wheel motor to which a gear assembly comprising a sun gear and a planetary gear is applied, thereby enabling a design of a geared in-wheel motor more lightweight and compact than an in-wheel motor of the related art.

The present disclosure is directed to a geared in-wheel motor in which an additional carrier used to install a planetary gear is omitted and in which a space for the carrier is excluded, thereby enabling a geared in-wheel motor to have a slim and compact structure.

The present disclosure is directed to a geared in-wheel motor which has an improved integrated structure with no carrier, in which a sun gear is fixed to a shaft, and in which a planetary gear is directly connected to a rotor and rotates at the same speed as the rotor, thereby ensuring a reduction in generation of noise and improved durability.

Aspects of the present disclosure are not limited to the above-described ones. Additionally, other aspects and advantages that have not been mentioned can be clearly understood from the following description and can be more clearly understood from embodiments. Further, it will be understood that the aspects and advantages of the present disclosure can be realized via means and combinations thereof that are described in the appended claims.

According to an aspect of the present disclosure, provided is a geared in-wheel motor to which a gear assembly comprising a sun gear and a planetary gear is applied, as a means to achieve the above objectives.

The geared in-wheel motor does not comprise a component, i.e., a carrier used to install a planetary gear, thereby enabling a geared in-wheel motor having a more lightweight structure and a more compact design than an in-wheel motor of the related art.

In other words, in the geared in-wheel motor, a space for the carrier used to install a planetary gear is omitted in a rim, thereby enabling a slim and compact structure of the geared in-wheel motor, and weight of the carrier is deducted, thereby making the in-wheel motor more lightweight.

The geared in-wheel motor according to an aspect of an embodiment may comprise a rim, a shaft, a motor assembly, a cover and a gear assembly.

The rim may denote a circular rigid member. A tire may wrap an outer wheel of the rim and may be coupled to the rim. The shaft may pass through a center of the rim and may connect to the rim.

The motor assembly may comprise a stator and a rotor.

The stator may connect to the shaft and may receive power from a leader line.

The stator may surround and wrap the shaft and may be fixed to the shaft such that the stator does not rotate along with the shaft.

The rotor may be disposed to wrap the stator, and a predetermined gap (referred to as an "air gap") may be formed between the rotor and the stator.

When power is supplied to the stator, an electromagnetic force may be generated between the stator and the rotor, and the rotor may rotate around the stator outside the stator.

In this case, the stator and the rotor may all be disposed in the rim.

The cover may cover one opened lateral surface of the rim and may be coupled to the rim. A plurality of electric and electronic components such as the motor assembly and the like vulnerable to moisture may be installed in the rim to which the cover is coupled.

Accordingly, the cover may cover the opened lateral surface of the rim, may be coupled to the rim, and may shield the inside of the rim from the outside to ensure a water-proof structure.

The gear assembly may be disposed in the rim, and may reduce a speed of rotation of the rotor.

The gear assembly may comprise a sun gear disposed at the same center as the rotor, and a plurality of planetary gears disposed to surround and wrap a circumference of the sun gear, fixed to the rotor, and configured to rotate along with the rotor.

Preferably, the sun gear may wrap an outer diameter of the shaft and may be coupled to the shaft. The sun gear, as described above, may be fixed to the shaft not to be rotated by the rotor. The sun gear differs from a sun gear of the related art in that the sun gear is fixed to the shaft while the sun gear of the related art is configured to rotate at the same speed as a rotor.

Additionally, the sun gear may be spaced a predetermined distance apart from the rotor and may be disposed to have the same center as the rotor. In other words, the sun gear may directly connect to the shaft and may be disposed to have the same center as the shaft and the rotor.

The plurality of planetary gears may be installed on one surface of the rotor.

Additionally, the plurality of planetary gears may be installed on one surface of the rotor and may be configured to protrude towards the sun gear fixed to the shaft.

Further, the plurality of planetary gears may be spaced a distance, corresponding to a radius of the sun gear fixed to the shaft, apart from the center of the rotor in a circumferential direction.

Each of the plurality of planetary gears may be provided with teeth engaged with the sun gear along a circumference thereof, and may be provided with a planetary gear body provided with a center hole and a planetary gear fixation body for installing and fixing the planetary gear body to the rotor, therein.

The planetary gear fixation body may comprise an insertion tube fitted-coupled to the center hole of the planetary gear body, and a pin inserted through the insertion tube and configured to pass through the planetary gear body and fixed to one surface of the rotor.

The pin may be provided with a circular pin head having a diameter larger than a diameter of a portion of the head, which inserted through the insertion tube.

In this case, the center hole of the planetary gear body may be provided with a circular step that contacts and supports the pin head and at least part of the insertion tube in contact with the pin head.

The planetary gear fixation body may further comprise a ringshaped plate bush interposed between the pin head and at least part of the insertion tube.

The pin may be provided with a pin coupling protrusion where a diameter of the pin is reduced from its front end and which protrudes such that the pin is screw-coupled to the rotor through a screw groove provided on one surface of the rotor.

Additionally, a plurality of penetration holes configured to penetrate the inside and the outside of the rotor may be provided on one surface of the rotor, to which the pin is fixed.

The plurality of penetration holes may be circular arc-shaped holes that are spaced a predetermined distance apart from each other in a circumferential direction, except a position to which the pin is fixed.

The gear assembly may further comprise a ring gear that is provided in a direction of the circumferences of the plurality of planetary gears and that is rotated in association with rotation of the plurality of planetary gears.

The ring gear may be fixed to the rim, and may be rotated in association with rotation of the plurality of planetary gears along with the rim.

The rim may be provided with an accommodation space where the motor assembly and the gear assembly are accommodated. In this case, one side where the motor assembly is disposed may be opened, and the cover may be coupled to the opened side.

Additionally, the rim may further comprise a lateral body disposed at a side opposite to a side where the cover is coupled, and formed to face the cover to store the gear assembly.

The rotor may comprise a plurality of magnets disposed to surround and wrap the stator with a predetermined gap between the rotor and the plurality of magnets.

The rotor may further comprise at least one Hall sensor substrate disposed near the motor assembly. The at least one Hall sensor substrate may be provided with a plurality of Hall sensors.

The plurality of planetary gears may be directly connected to one surface of the rotor without a carrier inserted into an additional installation space in the rim, and may rotate at the same speed as the rotor.

According to the present disclosure, provided is a geared in-wheel motor to which a gear assembly comprising a sun gear and a planetary gear is applied.

In the geared in-wheel motor, an additional carrier used to install a planetary gear is omitted and weight of the carrier is deducted, thereby enabling an in-wheel motor having a more lightweight structure than an in-wheel motor of the related art.

In the geared in-wheel motor, the carrier requiring a predetermined installation space is omitted, and a space for the carrier is excluded, thereby enabling a geared in-wheel motor having a slimmer and more compact structure than an in-wheel motor of the related art.

The geared in-wheel motor has an improved integrated structure with no carrier. In the geared in-wheel motor, a sun gear is fixed to a shaft and does not rotate along with the rotor unlike a sun gear of the related art configured to rotate along with a rotor, and a planetary gear is only connected to a rotor directly and rotates at the same speed as the rotor, thereby ensuring improved efficiency of reducing a speed of the rotor and durability of the sun gear and the planetary gear.

The geared in-wheel motor has an improved integrated structure with no carrier, thereby ensuring a reduction in costs incurred for raw materials and processing of the carrier and a reduction in the number of assembly components and enhancing productivity.

In the geared in-wheel motor, a plurality of penetration holes are provided at the rotor to which the planetary gear connects directly, and the planetary gear may be configured to rotate at the same speed of the rotor, thereby ensuring improved cooling efficiency of a motor using air flow between the inside and outside of the rotor.

Detailed effects of the present disclosure are described together with the above-described effects in the detailed description of the disclosure.

### BRIEF DESCRIPTION OF THE DRAWINGS

The accompanying drawings constitute a part of this specification, illustrate one or more embodiments of the present disclosure, and together with the specification, explain the present disclosure, wherein:
FIGS. 1 to 3 are views schematically illustrating a geared in-wheel motor of the related art;
FIG. 4 is a cross-sectional view schematically illustrating a geared in-wheel motor according to an aspect of an embodiment;
FIG. 5 is an exploded perspective view schematically illustrating a geared in-wheel motor according to an aspect of an embodiment;
FIG. 6 is a perspective view illustrating a way that a planetary gear is installed at a rotor of a geared in-wheel motor according an aspect of an embodiment;
FIG. 7 is an exploded perspective view illustrating the structure of coupling between the rotor and the planetary gear in FIG. 6; and
FIG. 8 is an enlarged cross-sectional view illustrating a cross section of area "A" in FIG. 4.

### DETAILED DESCRIPTION

The above-described aspects, features and advantages are specifically described with reference to the accompanying drawings hereunder such that one having ordinary skill in the art to which the present disclosure pertains may easily implement the technical spirit of the disclosure. During description in the disclosure, detailed description of known technologies in relation to the disclosure is omitted if it is deemed to make the gist of the present disclosure unnecessarily vague. Below, preferred embodiments according to the disclosure are described with reference to the accompanying drawings. Throughout the drawings, identical reference numerals denote identical or similar components.

In describing components of the present disclosure, terms such as first, second, and the like may be used. These terms are only intended to distinguish a component from another component, and the components are not limited to such terms. Certainly, unless explicitly stated otherwise, a first component may denote a second component.

Unless explicitly stated to the contrary, for each component, a single component or a plurality of components may be provided throughout the specification.

When any component is described as being "at an upper portion (or a lower portion) of a component" or "on (or under)" a component, any component may be placed on the upper surface (or the lower surface) of the component, and an additional component may be interposed between the component and any component placed on (or under) the component.

In describing the components of the disclosure, when any one component is described as being "connected," "coupled" or "connected" to another component, any component may be directly connected or may be able to be directly connected to another component; however, it is also to be understood that an additional component may be "interposed" between the two components, or the two components may be "connected", "coupled" or "connected" through an additional component.

Throughout the specification, the singular forms "a", "an" and "the" are intended to include their plural forms as well, unless explicitly indicated otherwise. In this specification, the term "comprise" or "include" and the like, when used in this specification, should not be interpreted as necessarily including stated components, or steps but may be interpreted as including some of the stated components or steps or should be interpreted as further including additional components or steps.

Throughout the specification, the term "A and/or B" denotes "A", "B" or "A and B", and the term "C to D" denotes "C or greater and D or less", unless explicitly indicated otherwise.

### Entire Structure of Geared In-Wheel Motor

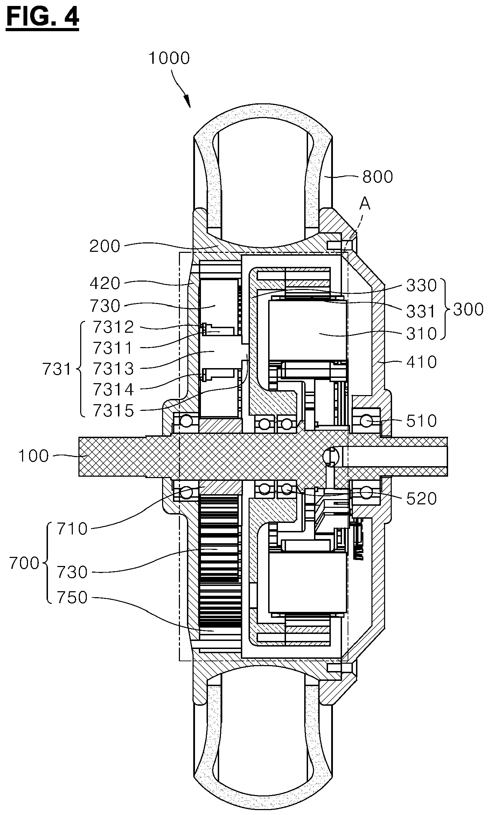

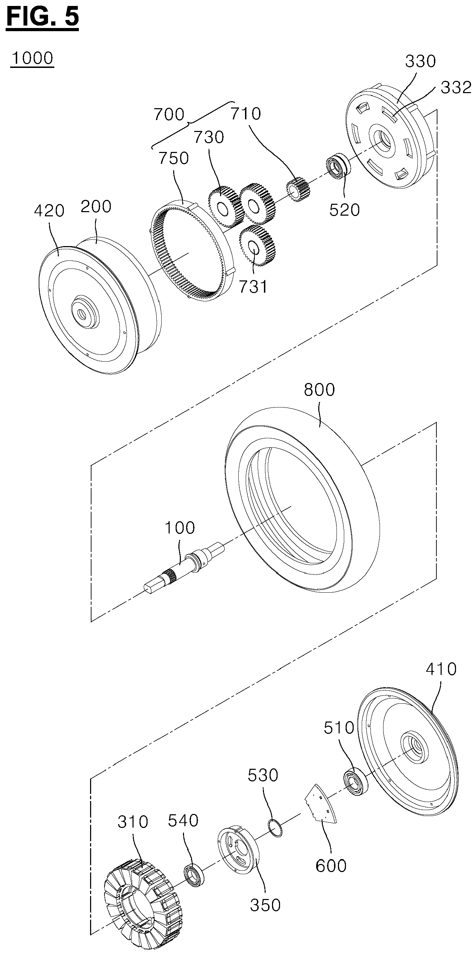

FIG. 4 is a cross-sectional view schematically illustrating a geared in-wheel motor according to an aspect of an embodiment, and FIG. 5 is an exploded perspective view schematically illustrating a geared in-wheel motor according to an aspect of an embodiment.

A gear assembly 700 comprising a sun gear 710 and a planetary gear 730 may be applied to a geared in-wheel motor 1000 according to an aspect of an embodiment.

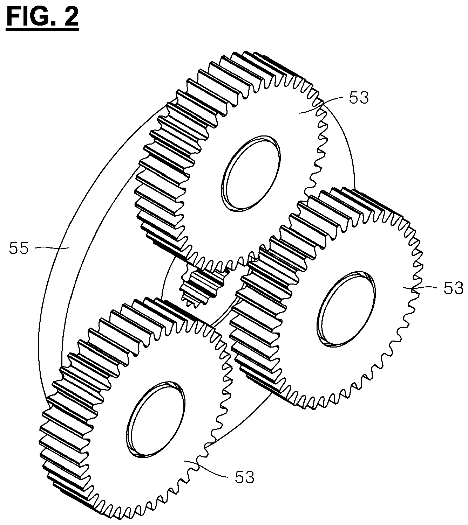

In the geared in-wheel motor 1000, a component, i.e., a carrier 55 (see FIG. 2), which is conventionally used for installing the planetary gear 730, is completely excluded.

In other words, in the geared in-wheel motor 1000, the carrier 55 (see FIG. 2) disposed in a rim 200 may be omitted, and a space for the carrier is not required. Accordingly, a slim and compact geared in-wheel motor may be designed. Further, weight of the carrier 55 (see FIG. 2) may be deducted from the entire weight of the geared in-wheel motor 1000. Accordingly, a lightweight geared in-wheel motor may be implemented.

Below, the entire structure of the geared in-wheel motor 1000 according to an aspect of a preferred embodiment is described.

Referring to FIGS. 4 and 5, the geared in-wheel motor 1000 may comprise a shaft 100, a rim 200, a motor assembly 300, a cover 410, and a gear assembly 700. Specifically, the geared in-wheel motor 1000 may further comprise a Hall sensor substrate 600, first, second and third bearings 510, 520, 540, and at least one O-ring 530.

The rim 200 may be a circular rigid member constituting a wheel.

A tire 800 may wrap an outer wheel of the rim 200 and may be coupled to the rim 200. To this end, the outer wheel of the rim 200 may be further provided with a tire separation prevention jaw to maintain a state where the tire 800 is installed.

The rim 200 is provided with a hole (referred to as "accommodation space") of a predetermined size, therein. A plurality of electric and electronic components (e.g. a Hall sensor and the like) including the shaft 100, the motor assembly 300 and the gear assembly 700 may be installed in the accommodation space of the rim 200.

The motor assembly 300 may be installed in the accommodation space of the rim 200, may surround and wrap the shaft 100, and may be coupled to the shaft 100.

Specifically, the motor assembly 300 may be coupled between the shaft 100 and the rim 200.

The motor assembly 300 may comprise a stator 310 and a rotor 330.

The stator 310 may connect with the shaft 100 and may receive power from the outside through a leader line for power supply.

For example, the leader line for power supply may be configured to connect to the inside of the rim 200 through a hole of the shaft 100 and to supply power to the stator 310.

The stator 310 may be disposed in a way that wraps the shaft 100 in the rim 200.

Additionally, the stator 310 may be firmly fixed and coupled to the shaft 100 by a fixation body 350 provided in the stator 310 while wrapping an outer diameter of the shaft 100.

The rotor 330 may be disposed to surround and wrap the stator 310 with a predetermined gap between the rotor 330 and the stator 310. Specifically, the rotor 330 may comprise a plurality of magnets 331 configured to surround and wrap the stator 310 with an air gap between the plurality of magnets 331 and the stator 310.

Additionally, the rotor 330 may be further provided with a structure referred to as a core to keep a distance between the plurality of magnets 331 installed and to fix the plurality of magnets 331 at their installation positions. The core may have different sizes and shapes.

For the motor assembly 300, power may be supplied to the stator 310, an electromagnetic force may be generated between the stator 310 and the rotor 330, and using the electromagnetic force, the rotor 330 may rotate around the stator 310.

As the rotor 330 rotates, the rim 200 may rotate in association with rotation of the rotor 330. Then, as the rim 200 rotates, the tire 800 mounted onto the outer wheel of the rim 200 may rotate around the shaft 100.

The cover 410 may cover one opened lateral surface of the rim 200, may be coupled to the rim 200, and may seal the inside of the rim 200 from the outside.

The cover 410 may seal the inside of the rim 200 from the outside, and may protect a plurality of electric and electronic components such as the motor assembly 300 vulnerable to moisture.

That is, the cover 410 may be coupled to the opened portion of the rim 200 and may ensure a waterproof structure for the accommodation space in the rim 200.

The gear assembly 700 may be disposed in the rim 200 and may perform a function of reducing a speed of rotation of the rotor 330.

The gear assembly 700 may comprise a sun gear 710 and a planetary gear 730.

The sub gear 710 may be disposed at the same center as the rotor.

A plurality of planetary gears 730 may be provided and disposed to surround and wrap a circumference of the sun gear 710.

According to an aspect of the invention the plurality of planetary gears 730 are directly mounted and fixed onto one surface of the rotor 330 and rotate at the same speed as the rotor 330 without an additional component, i.e., a carrier 55 (see FIG. 2), for installing the planetary gear of the related art.

Accordingly, an additional space for installing the carrier 55 (see FIG. 2) is not required in the accommodation space in the rim 200, thereby ensuring a design of an in-wheel motor slimmer and more compact than an in-wheel motor of the related art.

Additionally, weight of the carrier 55 (see FIG. 2) itself may be deducted from the entire weight of the in-wheel motor, thereby ensuring a reduction in the entire weight of the in-wheel motor and implementing a lightweight in-wheel motor and lightweight transportation means using the in-wheel motor.

Further, the gear assembly 700 may further comprise a ring gear 750 in addition to the sun gear 710 and the planetary gear 730.

The ring gear 750 may be fixed into the rim 200 and may be disposed to contact outer circumferences of the plurality of planetary gears 730.

The ring gear 750 may rotate in association with rotation of the plurality of planetary gears 730. As such, the ring gear 750 may supply a rotational force the speed of which is changed by the planetary gear 730 to the rim 200 and may rotate the tire 800.

Additionally, the rim 200 may further comprise a lateral body 420 integrated with the rim 200 and configured to seal the accommodation space in the rim 200 at a side opposite to the side of the rim 200 to which the cover 410 is coupled.

The lateral body 420 may be disposed to face the gear assembly 700, particularly, the plurality of planetary gears 730, may be spaced a predetermined distance apart from the plurality of planetary gears 730, and may be formed in parallel with the cover 410 in a direction where the lateral body 420 faces the cover 410.

The geared in-wheel motor 1000 according to an aspect of an embodiment may comprise at least one Hall sensor substrate 600.

The Hall sensor substrate 600 may be disposed near the motor assembly 300. Specifically, the Hall sensor substrate 600 may be disposed between the motor assembly 300 and the cover 410.

The Hall sensor substrate 600 may be provided with a plurality of Hall sensors (e.g., two Hall sensors and the like). With the configuration, the Hall sensor substrate 600 may measure a magnetic force of the motor assembly 300 precisely and stably.

The Hall sensor substrate 600 may be further provided with an additional substrate insulator. The Hall sensor substrate 600 may be firmly fixed using the substrate insulator and may be kept at its initial installation position. As such, the Hall sensor substrate 600 may measure a magnetic force of the motor assembly 300 stably.

The geared in-wheel motor 1000 may comprise a plurality of bearings, i.e., first, second and third bearings 510, 520, 540.

The first bearing 510 may be provided between the cover 410 and the shaft 100 and may reduce rotational friction between the cover 410 and the shaft 100. The second and third bearings 520, 540 may be provided between the motor assembly 300 and the shaft 100 and may reduce rotational friction between the motor assembly 300 and the shaft 100. In addition, at least one bearing may be additionally provided between the rim 200 and the shaft 100 and may reduce rotational friction between the rim 200 and the shaft 100. The number of first, second and third bearings 510, 520, 540 is not limited to the number of illustrated ones.

The geared in-wheel motor 1000 according to an aspect of an embodiment may comprise at least one O-ring 530. The O-ring 530, for example, may be provided at a portion where the shaft 100 and the motor assembly 300 connect to each other, and may prevent external moisture or water from infiltrating into the motor assembly 300.

Additionally, the geared in-wheel motor 1000 may further comprise a plurality of insulators. The stator 310, for example, may be provided with at least one insulator.

### Structure of Gear Assembly

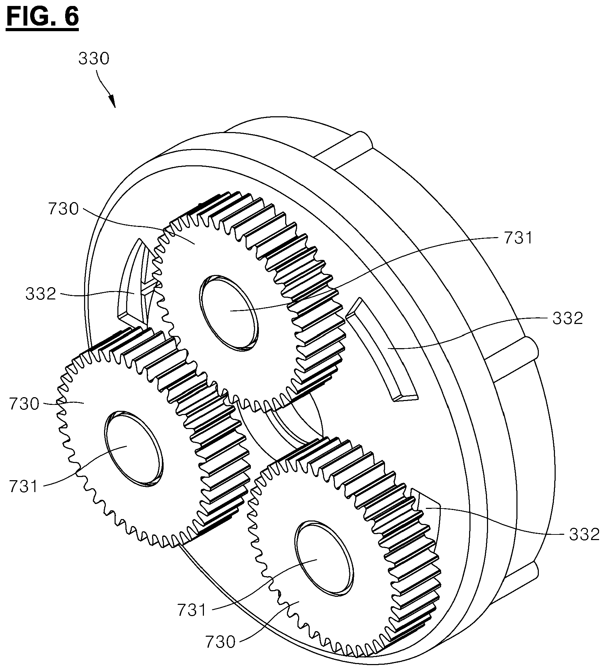

Next, a gear assembly of a geared in-wheel motor according to an aspect of an embodiment is described with reference to FIGS. 6 to 8.

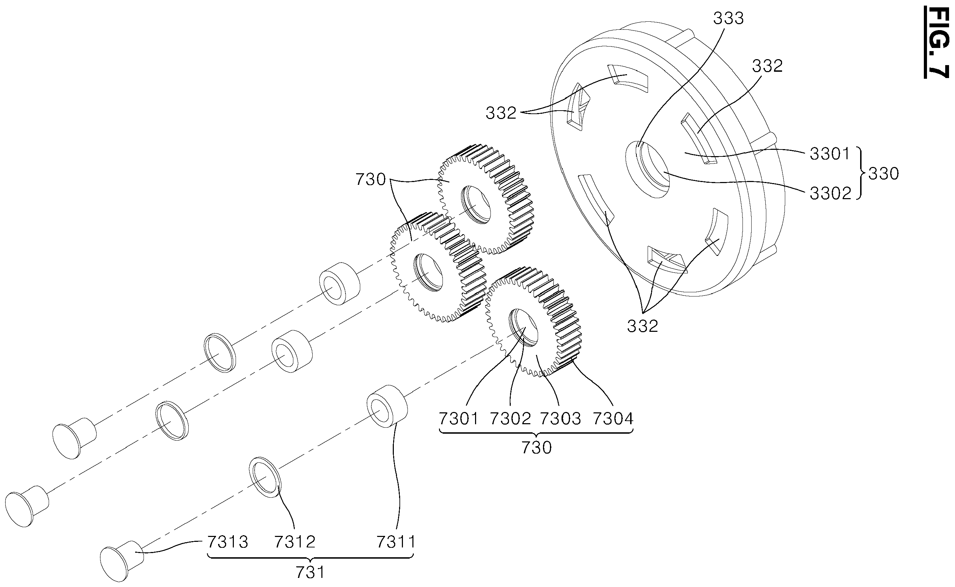

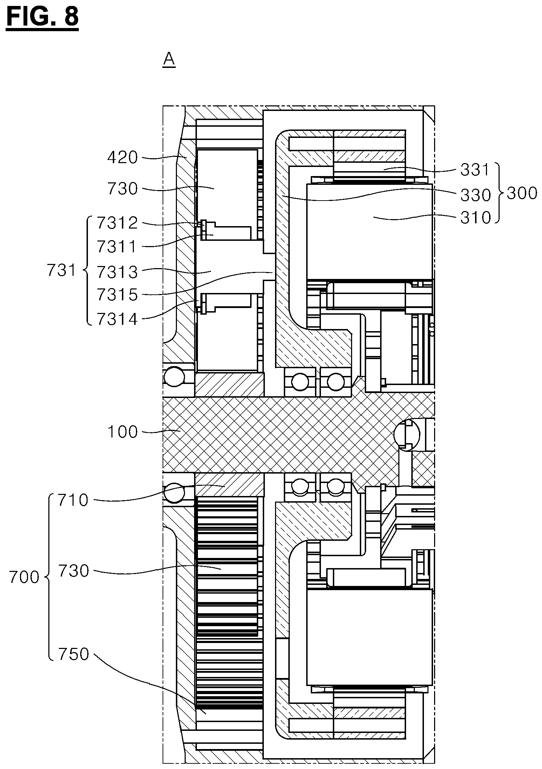

FIG. 6 is a perspective view illustrating a way that a planetary gear is installed at a rotor of a geared in-wheel motor according an aspect of an embodiment, FIG. 7 is an exploded perspective view illustrating the structure of coupling between the rotor and the planetary gear in FIG. 6, and FIG. 8 is an enlarged cross-sectional view illustrating a cross section of area "A" in FIG. 4.

In the geared in-wheel motor according to an aspect of the invention, unlike a planetary gear of the related art, a plurality of planetary gears 730 are not installed at a carrier 55 (see FIG. 2) of the related art and the like, and are installed directly on one surface of a rotor 330.

A gear assembly 700 (see FIG. 4) may be disposed in a rim 200 (see FIG. 4) and may receive rotational force of the rotor 330 and reduce a speed of the rotor 330.

To this end, the gear assembly 700 (see FIG. 4) may comprise a sun gear 710 (see FIG. 4) directly connected to a shaft 100 (see FIG. 4), and a planetary gear 730 disposes to surround and wrap a circumference of the sun gear 710 (see FIG. 4) and fixed to the rotor 330.

The sun gear 710 may wrap an outer diameter of the shaft 100, and may be coupled to the shaft 100. Unlike a sun gear of the related art, the sun gear 710 may not be fixed to the rotor 330. As such, the sun gear 710 may not rotate although the rotor 330 rotates, and may be directly connected and fixed only to the shaft 100 and may not rotate. In other words, unlike the sun gear of the related art, the sun gear 710 is configured not to rotate at the same speed as the rotor 330 (see FIG. 4).

Additionally, the sun gear 710 may be disposed to have the same center as the rotor 330 and may be spaced a predetermined distance apart from the rotor 330. In other words, the sun gear 710 may be directly connected to the shaft 100 and may be disposed to have the same center as the shaft 100 and the rotor 330 (see FIG. 4).

A plurality of planetary gears 730 may be provided, may be installed and fixed onto one surface of the rotor 330, and may be configured to rotate along with the rotor 330 (see FIG. 6).

Referring to FIG. 6, the plurality of planetary gears, i.e., three planetary gears 730 may be mounted onto one surface of the rotor 330.

Specifically, the plurality of planetary gears 730 may be mounted onto one surface of the rotor 330 and may protrude towards the sun gear 710 (see FIG. 4) fixed to the shaft 100 (see FIG. 4).

The plurality of planetary gears 730 may be spaced a distance, corresponding to a radius of the sun gear 710 (see FIG. 4) fixed to the shaft 100 (see FIG. 4), apart from a center of the rotor 330 in a circumferential direction.

Referring to FIG. 6, three planetary gears 730, which respectively have a central angle of 120 degrees, may be spaced a predetermined distance apart from the center of the rotor 330 in the circumferential direction.

Referring to FIG. 7, each of the plurality of planetary gears 730 may comprise a planetary gear body 7303 and a planetary gear fixation body 731.

The planetary gear body 7303 may be provided with teeth 7304 engaged with the sun gear 710 along a circumference thereof, and may be provided with a center hole 7301 therein.

The planetary gear fixation body 731 may install the planetary gear body 7303 at the rotor and may fix the same to the rotor.

The planetary gear fixation body 731 may comprise an insertion tube 7311 and a pin 7313.

The insertion tube 7311 may be a tube-shaped member fitted-coupled to the center hole 7310 of the planetary gear body 7303.

The pin 7313 may be inserted through the insertion tube 7311 and may pass through the planetary gear body 7303. A front end of the pin 7313 may be fixed to one surface of the rotor 330 in various ways. For example, the front end of the pin 7313 may be fixed to one surface of the rotor 330 through the welding process and the like. Alternatively, a coupling groove may be provided on one surface of the rotor 330, a screw thread may be formed on the front end of the pin 7313, and the front end of the pin 7313 may be screw-coupled to one surface of the rotor 330.

The pin 7313 may be further provided with a circular pin head 7314 (see FIG. 8) having a diameter larger than a diameter of a portion of the pin 7313 inserted through the insertion tube 7311.

In this case, the center hole 7301 of the planetary gear body 7303 may be further provided with a circular step 7302 that contacts and supports the pin head 7314 (see FIG. 8) and at least part of the insertion tube 7311 in contact with the pin head 7314 (see FIG. 8).

Further, the planetary gear fixation body 731 may further comprise a ring plate-shaped bush 7312 interposed between the pin head 7314 (see FIG. 8) and at least part of the insertion tube 7311.

In a specific example, the pin 7313 may be provided with a pin coupling protrusion 7315, the diameter of which is reduced at a front end thereof and which protrudes from the front end, such that the pin 7313 is screw-coupled through a female thread-shaped coupling groove provided on one surface of the rotor 330.

The enlarged cross section in FIG. 8 specifically illustrates a structure where the planetary gear fixation body 731 is fixed to one surface of the rotor 330 and its specific configuration.

A plurality of penetration holes 332 configured to penetrate the inside and the outside of the rotor 330 may be further provided on one surface of the rotor 330, to which the pin 7313 is fixed.

One surface of the rotor 330 may be formed into a circular plate 3301, and may be provided with a center hole 3302 through which the shaft 100 (see FIG. 4) passes and to which the shaft 100 (see FIG. 4) is assembled, at a center thereof. Additionally, a circular mounting groove 333 having a diameter larger than a diameter of the center hole 3302 may be formed at an outer side of the center hole 3302, i.e., in a direction where the planetary gear 730 is installed. The mounting groove 333 may be used as a space where a bearing for reducing contact friction between the mounting groove 333 and the shaft 100 is installed.

The plurality of penetration holes 332 may be formed to penetrate the circular plate 3301 provided on one surface of the rotor 330 in a thickness-wise direction of the circular plate 3301.

In other words, the plurality of penetration holes 332 may be formed to penetrate the inside and the outside of the rotor 330 and may be used as a flow path for air required to cool a motor assembly 300 (see FIG. 4).

In a specific example, the plurality of penetration holes 332 may be spaced a predetermined distance apart from each other in a circumferential direction, except a position to which the pin 7313 is fixed. The penetration holes 332, as illustrated, may be formed into a circular arc-shaped hole. The number of the illustrated penetration holes 332 is six but not limited.

When the rotor 330 rotates, the plurality of planetary gears 730 may rotate at the same speed as the rotor 330, and in this case, air flow may be generated. The air flow may be induced into the rotor 330 through the plurality of penetration holes 332 and may be used to cool the motor assembly.

According to the present disclosure, provided is a geared in-wheel motor to which a gear assembly comprising a sun gear and a planetary gear is applied.

Particularly, an additional carrier used for installing a planetary gear may be omitted, and weight of the carrier may be deducted, thereby ensuring a geared in-wheel motor more lightweight than an in-wheel motor of the related art.

Additionally, the carrier requiring a predetermined installation space may be omitted, and the space for the carrier may also be removed, thereby ensuring a geared in-wheel motor slimmer and more compact than an in-wheel motor of the related art.

As the geared in-wheel motor has an integrated structure, the sun gear may be fixed to a shaft not to rotate along with the rotor while a plurality of planetary gears rotate at the same speed as the rotor, thereby improving efficiency of reducing a speed of the rotor and improving durability between of the sun gear and the planetary gears.

As the geared in-wheel motor has an integrated structure, costs incurred for raw materials and processing of the carrier may be deducted, and the number of components may be reduced, thereby enhancing productivity.

Further, the rotor, to which the planetary gear directly connects, may be provided with a plurality of penetration holes, and the planetary gear may be configured to rotate at the same speed as the rotor, thereby improving efficiency of cooling a motor using air flow inside and outside the rotor.

The present disclosure has been described with reference to the embodiments illustrated in the drawings. However, the disclosure is not limited to the embodiments and the drawings set forth herein. Further, various modifications may be made by one having ordinary skill in the art within the scope of the apended claims.

Further, though not explicitly described during the description of the embodiments of the disclosure, effects and predictable effects based on the configuration of the disclosure should be included in the scope of the disclosure.

**[Description of the Symbols]**

| | | | |
|---|---|---|---|
| 100: | Shaft | 200: | Rim |
| 300: | Motor assembly | 310: | Stator |
| 330: | Rotor | 3301: | Circular plate |
| 3302: | Center hole | 331: | Magnet |
| 332: | Penetration hole | 333: | Mounting groove |
| 335: | Coupling groove | 350: | Fixation body |
| 410: | Cover | 420: | Lateral body |
| 510: | First bearing | 520: | Second bearing |
| 530: | O-ring | 540: | Third bearing |
| 600: | Hall sensor substrate | 700: | Gear assembly |
| 710: | Sun gear | 730: | Planetary gear |
| 7301: | Center hole of planetary gear body | | |
| 7302: | Circular step | 7303: | Planetary gear body |
| 7304: | Teeth | 731: | Planetary gear fixation body |
| 7311: | Insertion tube | 7312: | Bush |
| 7313: | Pin | 7314: | Pin head |
| 7315: | Pin coupling protrusion | 750: | Ring gear |
| 800: | Tire | 1000: | Geared in-wheel motor |

## Claims

1. A geared in-wheel motor (1000), comprising:
a circular rim (200), an outer wheel of which is wrapped by a tire (800) and which is coupled to the tire (800);
a shaft (100) configured to pass through a center of the rim (200) and connected to the rim (200);
a motor assembly (300) comprising a stator (310) connected and fixed to the shaft (100) in the rim (200), and a rotor (330) disposed to wrap the stator (310) and configured to rotate;
a cover (410) configured to seal an opened portion of the rim (200) and coupled to the rim (200); and
a gear assembly (700) disposed in the rim (200) and configured to reduce a speed of rotation of the rotor (330),
the gear assembly (700), comprising:
a sun gear (710) disposed at the same center as the rotor (330); and
a plurality of planetary gears (730) disposed to surround and wrap a circumference of the sun gear (710), fixed to the rotor (330) and configured to rotate along with the rotor (330),
wherein the plurality of planetary gears (730) is directly connected to one surface of the rotor (330) without a carrier.

2. The geared in-wheel motor (1000) of claim 1, wherein the sun gear (710) wraps an outer diameter of the shaft (100), is coupled to the shaft (100), and is fixed to the shaft (100) not to be rotated by the rotor (330).

3. The geared in-wheel motor (1000) of claim 2, wherein the sun gear (710) is spaced a predetermined distance apart from the rotor (330) and is disposed to have the same center as the rotor (330).

4. The geared in-wheel motor (1000) of claim 2 or 3, wherein the plurality of planetary gears (730) is mounted onto one surface of the rotor (330) and protrudes towards the sun gear (710) fixed to the shaft (100).

5. The geared in-wheel motor (1000) of claim 4, wherein the plurality of planetary gears (730) is spaced a distance, corresponding to a radius of the sun gear (710) fixed to the shaft (100), apart from the center of the rotor (330) in a circumferential direction.

6. The geared in-wheel motor (1000) of claim 4 or 5, each of the plurality of planetary gears (730), comprising:
a planetary gear body (7303) provided with teeth (7304) engaged with the sun gear (710) along a circumference thereof, and provided with a center hole (7301) therein; and
a planetary body fixation body (731) configured to install the planetary gear body (7303) to the rotor and to fix the same to the rotor (330).

7. The geared in-wheel motor (1000) of claim 6, the planetary gear fixation body (731), comprising:
an insertion tube (7311) fitted-coupled to the center hole (7301) of the planetary gear body (7303); and
a pin (7313) inserted through the insertion tube (7311), configured to pass through the planetary gear body (7303) and fixed onto one surface of the rotor (330).

8. The geared in-wheel motor (1000) of claim 7, wherein the pin (7313) is provided with a circular pin head (7314) having a diameter larger than a diameter of a portion of the pin (7313) inserted through the insertion tube (7311).

9. The geared in-wheel motor (1000) of claim 8, wherein the center hole (7301) of the planetary gear body (7303) is provided with a circular step (7302) that contacts and accommodates the pin head (7314) and at least part of the insertion tube (7311) in contact with the pin head (7314).

10. The geared in-wheel motor (1000) of claim 9, the planetary gear fixation body (731), further comprising:
a bush (7312) interposed between the pin head (7314) and at least part of the insertion tube (7311).

11. The geared in-wheel motor (1000) of any one of claims 7 to 10, wherein the pin (7313) is provided with a pin coupling protrusion (7315) protruding from a front end of the pin (7313) such that the pin (7313) is screw-coupled to the rotor through a screw groove provided on one surface of the rotor (330).

12. The geared in-wheel motor (1000) of any one of claims 7 to 11, wherein a plurality of penetration holes (332) configured to penetrate an inside and an outside of the rotor (330) is provided on one surface of the rotor (330), to which the pin (7313) is fixed.

13. The geared in-wheel motor (1000) of claim 12, wherein the plurality of penetration holes (332) is circular arc-shaped holes that are spaced a predetermined distance apart from each other in a circumferential direction, except a position to which the pin (7313) is fixed.

14. The geared in-wheel motor (1000) of any one of claims 1 to 13, the gear assembly (700), further comprising:
a ring gear (750) provided in a direction of a circumference of the plurality of planetary gears (730), and rotated in association with rotation of the plurality of planetary gears (730).

15. The geared in-wheel motor (1000) of claim 14, wherein the ring gear (750) is fixed to the rim (200), and is rotated in association with rotation of the plurality of planetary gears (730) along with the rim (200).

## Patentansprüche

1. Radintegrierter Getriebemotor (1000), der aufweist:
eine kreisförmige Felge (200), deren äußeres Rad durch einen Reifen (800) umwickelt ist und die mit dem Reifen (800) gekoppelt ist;
eine Welle (100), die konfiguriert ist, durch die Mitte der Felge (200) zu gehen und mit der Felge (200) verbunden ist;
eine Motoranordnung (300), die einen Stator (310), der mit der Welle (100) in der Felge (200) verbunden und an dieser befestigt ist, und einen Rotor (330) aufweist, der angeordnet ist, den Stator (310) zu umhüllen, und konfiguriert ist, sich zu drehen;
eine Abdeckung (410), die konfiguriert ist, einen offenen Abschnitt der Felge (200) abzudichten, und mit der Felge (200) gekoppelt ist; und
eine Getriebeanordnung (700), die in der Felge (200) angeordnet und konfiguriert ist, eine Drehzahl des Rotors (330) zu reduzieren,
wobei die Getriebeanordnung (700) aufweist:
ein Sonnenrad (710), das in derselben Mitte wie der Rotor (330) angeordnet ist; und
mehrere Planetenräder (730), die so angeordnet sind, dass sie den Umfang des Sonnenrads (710) umgeben und umhüllen, am Rotor (330) befestigt und konfiguriert sind, sich zusammen mit dem Rotor (330) zu drehen,
wobei die mehreren Planetenräder (730) ohne einen Träger direkt mit einer Oberfläche des Rotors (330) verbunden sind.

2. Radintegrierter Getriebemotor (1000) nach Anspruch 1, wobei das Sonnenrad (710) einen Außendurchmesser der Welle (100) umhüllt, mit der Welle (100) gekoppelt ist und so an der Welle (100) befestigt ist, dass es nicht durch den Rotor (330) gedreht wird.

3. Radintegrierter Getriebemotor (1000) nach Anspruch 2, wobei das Sonnenrad (710) vom Rotor (330) mit einem vorbestimmten Abstand beabstandet und so angeordnet ist, dass es dieselbe Mitte wie der Rotor (330) aufweist.

4. Radintegrierter Getriebemotor (1000) nach Anspruch 2 oder 3, wobei die mehreren Planetenräder (730) an einer Oberfläche des Rotors (330) montiert sind und zu dem an der Welle (100) befestigten Sonnenrad (710) vorstehen.

5. Radintegrierter Getriebemotor (1000) nach Anspruch 4, wobei die mehreren Planetenräder (730) mit einem Abstand, der einem Radius des an der Welle (100) befestigten Sonnenrads (710) entspricht, von der Mitte des Rotors (330) in einer Umfangsrichtung beabstandet sind.

6. Radintegrierter Getriebemotor (1000) nach Anspruch 4 oder 5, wobei jedes der mehreren Planetenräder (730) aufweist:
einen Planetenradkörper (7303), der mit Zähnen (7304) versehen ist, die mit dem Sonnenrad (710) entlang dessen Umfangs in Eingriff stehen, und mit einem Mittelloch (7301) darin versehen ist; und
einen Planetenradkörper-Befestigungskörper (731), der konfiguriert ist, den Planetenradkörper (7303) am Rotor zu installieren und diesen am Rotor (330) zu befestigen.

7. Radintegrierter Getriebemotor (1000) nach Anspruch 6, wobei der Planetenradkörper-Befestigungskörper (731) aufweist:
ein Einsatzrohr (7311), das mit dem Mittelloch (7301) des Planetenradkörpers (7303) passgekoppelt ist; und
einen Stift (7313), der durch das Einsatzrohr (7311) eingesetzt ist, konfiguriert ist, durch den Planetenradkörper (7303) zu gehen und an einer Oberfläche des Rotors (330) befestigt ist.

8. Radintegrierter Getriebemotor (1000) nach Anspruch 7, wobei der Stift (7313) mit einem kreisförmigen Stiftkopf (7314) versehen ist, der einen Durchmesser aufweist, der größer ist als ein Durchmesser eines Abschnitts des Stifts (7313), der durch das Einsatzrohr (7311) eingesetzt ist.

9. Radintegrierter Getriebemotor (1000) nach Anspruch 8, wobei das Mittelloch (7301) des Planetenradkörpers (7303) mit einer kreisförmigen Stufe (7302) versehen ist, die den Stiftkopf (7314) und mindestens einen Teil des Einsatzrohrs (7311), das mit dem Stiftkopf (7314) in Kontakt steht, berührt und aufnimmt.

10. Radintegrierter Getriebemotor (1000) nach Anspruch 9, wobei der Planetenradkörper-Befestigungskörper (731) ferner aufweist:
eine Buchse (7312), die zwischen dem Stiftkopf (7314) und mindestens einem Teil des Einsatzrohrs (7311) angeordnet ist.

11. Radintegrierter Getriebemotor (1000) nach einem der Ansprüche 7 bis 10, wobei der Stift (7313) mit einem Stiftkopplungsvorsprung (7315) versehen ist, der von einem vorderen Ende des Stifts (7313) vorsteht, so dass der Stift (7313) durch eine an einer Oberfläche des Rotors (330) vorgesehene Schraubnut mit dem Rotor schraubgekoppelt ist.

12. Radintegrierter Getriebemotor (1000) nach einem der Ansprüche 7 bis 11, wobei mehrere Eindringlöcher (332), die konfiguriert sind, ein Inneres und ein Äußeres des Rotors (330) zu durchdringen, an einer Oberfläche des Rotors (330) vorgesehen sind, an der der Stift (7313) befestigt ist.

13. Radintegrierter Getriebemotor (1000) nach Anspruch 12, wobei die mehreren Eindringlöcher (332) kreisbogenförmige Löcher sind, die mit Ausnahme einer Position, an der der Stift (7313) befestigt ist, in einer Umfangsrichtung in einem vorbestimmten Abstand voneinander beabstandet sind.

14. Radintegrierter Getriebemotor (1000) nach einem der Ansprüche 1 bis 13, wobei die Getriebeanordnung (700) ferner aufweist:
ein Hohlrad (750), das in einer Richtung des Umfangs der mehreren Planetenräder (730) vorgesehen ist, und in Verbindung mit der Drehung der mehreren Planetenräder (730) gedreht wird.

15. Radintegrierter Getriebemotor (1000) nach Anspruch 14, wobei das Hohlrad (750) an der Felge (200) befestigt ist, und in Verbindung mit der Drehung der mehreren Planetenräder (730) entlang der Felge (200) gedreht wird.

## Revendications

1. Moteur-roue à engrenages (1000), comprenant :
une jante circulaire (200), dont une roue extérieure est enveloppée par un pneu (800) et qui est accouplée au pneu (800) ;
un arbre (100) prévu pour passer par le centre de la jante (200), et raccordé à la jante (200) ;
un ensemble moteur (300) comprenant un stator (310) raccordé et fixé à l'arbre (100) dans la jante (200), et un rotor (330) disposé de manière à envelopper le stator (310) et prévu pour tourner ;
un couvercle (410) prévu pour obturer une partie ouverte de la jante (200) et accouplé à la jante (200) ; et
un ensemble d'engrenages (700) disposé dans la jante (200) et prévu pour réduire la vitesse de rotation du rotor (330),
l'ensemble d'engrenages (700) comprenant :
une roue solaire (710) disposée sur le même centre que le rotor (330) ; et
une pluralité d'engrenages planétaires (730) disposés de manière à entourer et envelopper la circonférence de la roue solaire (710), fixés au rotor (330) et prévus pour tourner conjointement avec le rotor (330),
où la pluralité d'engrenages planétaires (730) est raccordée directement, sans support, à une surface du rotor (330).

2. Moteur-roue à engrenages (1000) selon la revendication 1, où la roue solaire (710) enveloppe le diamètre extérieur de l'arbre (100), est raccordée à l'arbre (100), et est fixée à l'arbre (100) de manière à ne pas être entraînée en rotation par le rotor (330).

3. Moteur-roue à engrenages (1000) selon la revendication 2, où la roue solaire (710) est espacée d'une distance définie du rotor (330) et est disposée de manière à avoir le même centre que le rotor (330).

4. Moteur-roue à engrenages (1000) selon la revendication 2 ou la revendication 3, où la pluralité d'engrenages planétaires (730) est montée sur une surface du rotor (330) et fait saillie vers la roue solaire (710) fixée à l'arbre (100).

5. Moteur-roue à engrenages (1000) selon la revendication 4, où la pluralité d'engrenages planétaires (730) est espacée du centre du rotor (330) dans la direction circonférentielle, d'une distance correspondant au rayon de la roue solaire (710) fixée à l'arbre (100).

6. Moteur-roue à engrenages (1000) selon la revendication 4 ou la revendication 5, où chaque engrenage de la pluralité d'engrenages planétaires (730) comprend :
un corps (7303) d'engrenage planétaire pourvu de dents (7304) engrenées avec la roue solaire (710) sur la circonférence de celle-ci, et pourvu d'un trou central (7301) ; et
un corps de fixation (731) de corps planétaire prévu pour monter le corps (7303) d'engrenage planétaire sur le rotor et pour le fixer au rotor (330).

7. Moteur-roue à engrenages (1000) selon la revendication 6, où le corps de fixation (731) d'engrenage planétaire comprend :
un manchon d'insertion (7311) accouplé par ajustement au trou central (7301) du corps (7303) d'engrenage planétaire ; et
une broche (7313) insérée dans le manchon d'insertion (7311), prévue pour traverser le corps (7303) d'engrenage planétaire et fixée sur une surface du rotor (330).

8. Moteur-roue à engrenages (1000) selon la revendication 7, où la broche (7313) est pourvue d'une tête (7314) de broche circulaire dont le diamètre est supérieur au diamètre de la partie de la broche (7313) insérée dans le manchon d'insertion (7311).

9. Moteur-roue à engrenages (1000) selon la revendication 8, où le trou central (7301) du corps (7303) d'engrenage planétaire est pourvu d'un épaulement circulaire (7302) qui contacte et reçoit la tête (7314) de broche et au moins une partie du manchon d'insertion (7311) en contact avec la tête (7314) de broche.

10. Moteur-roue à engrenages (1000) selon la revendication 9, où le corps de fixation (731) d'engrenage planétaire comprend en outre :
un coussinet (7312) intercalé entre la tête (7314) de broche et au moins une partie du manchon d'insertion (7311).

11. Moteur-roue à engrenages (1000) selon l'une des revendications 7 à 10, où la broche (7313) est pourvue d'une saillie d'accouplement (7315) de broche s'étendant depuis l'extrémité avant de la broche (7313) de manière à accoupler par vissage la broche (7313) au rotor par une rainure filetée prévue sur une surface du rotor (330).

12. Moteur-roue à engrenages (1000) selon l'une des revendications 7 à 11, où une pluralité de trous traversants (332) prévus pour traverser l'intérieur et l'extérieur du rotor (330) sont prévus sur une surface du rotor (330) à laquelle la broche (7313) est fixée.

13. Moteur-roue à engrenages (1000) selon la revendication 12, où la pluralité de trous traversants (332) est constituée de trous en arc de cercle espacés l'un de l'autre d'une distance définie dans la direction circonférentielle, à l'exception d'un emplacement où la broche (7313) est fixée.

14. Moteur-roue à engrenages (1000) selon l'une des revendications 1 à 13, où l'ensemble d'engrenages (700) comprend en outre :
une couronne (750) prévue dans la direction de la circonférence de la pluralité d'engrenages planétaires (730), et rotative conjointement avec la pluralité d'engrenages planétaires (730).

15. Moteur-roue à engrenages (1000) selon la revendication 14, où la couronne (750) est fixée à la jante (200), et est rotative avec la pluralité d'engrenages planétaires (730) conjointement avec la jante (200).
